# EUROPÄISCHE PATENTSCHRIFT

(11) **EP 0 712 523 B1**
(45) Veröffentlichungstag und Bekanntmachung des Hinweises auf die Patenterteilung: **23.04.1997**
(21) Anmeldenummer: 94921589.1
(22) Anmeldetag: 22.07.1994
(51) Int. Cl.: G08G 1/054

(54) **VERFAHREN UND VORRICHTUNG ZUR VERKEHRSÜBERWACHUNG**
TRAFFIC SURVEILLANCE PROCESS AND DEVICE
PROCEDE ET DISPOSITIF DE SURVEILLANCE DU TRAFIC ROUTIER

(30) Priorität: 06.08.1993 DE 4326398
(43) Veröffentlichungstag der Anmeldung: 22.05.1996
(73) Patentinhaber: LEICA SENSORTECHNIK GMBH, D-35539 Wetzlar (DE)
(72) Erfinder: BORSCH, Manfred, D-35415 Pohlheim (DE); PFAFF, Reiner, D-35684 Dillenburg (DE)
(74) Vertreter: Stamer, Harald, Dipl.-Phys.
(86) Internationale Anmeldenummer: DE9400854
(87) Internationale Veröffentlichungsnummer: WO9504982

(56) Entgegenhaltungen:
- FR-A- 2 328 198

## Beschreibung

Die Erfindung betrifft ein Verfahren zur Verkehrsüberwachung gemäß dem Oberbegriff des Anspruchs 1 (DE 39 08 069 A1) und eine Vorrichtung zur Durchführung des Verfahrens gemäß dem Oberbegriff des Anspruchs 2.

Aus der DE 40 32 459 A1 ist ein Verfahren und eine Vorrichtung zur Ermittlung und Registrierung von Fahrzeuggeschwindigkeiten zwecks Verkehrsüberwachung bekannt, wobei eine elektronische Kamera mit einem Speicher, eine Rechenschaltung zur Berechnung der Fahrzeuggeschwindigkeit und eine Wiedergabeeinrichtung verwendet werden. Die auf der Basis von CCD-Elementen arbeitende elektronische Kamera ist mit zwei Objektiven versehen, die in ihrem Aufnahmewinkel zueinander verstellbar sind. Zu definierten Zeitpunkten werden Bilder des Fahrzeuges aufgenommen, in elektronischen Einrichtungen gespeichert und verarbeitet. Im einzelnen wird mit dem ersten Objektiv der Kamera ein erstes Bild des Fahrzeuges erfaßt, zwischengespeichert und mit einem zweiten Bild aus dem ersten Objektiv verglichen, wobei aus dem seitlichen Versatz zwischen den beiden Bildem in der Rechenschaltung die Fahrzeuggeschwindigkeit berechnet wird. Mit dem zweiten Objektiv wird das amtliche Kennzeichen erfaßt und mit weiteren Daten im Sucherbild dargestellt sowie abgespeichert. Die Steuerung der Abspeicherung der Bilder des zweiten Objektivs kann automatisch mittels der Rechenschaltung erfolgen, und die abgespeicherten Bilder und Daten sind sodann auf einem Monitor darstellbar.

Aus der EP-0 188 694 A2 ist weiterhin ein Verfahren und eine Vorrichtung zur fotografischen Registrierung von Fahrzeugen mittels einer mit einer Bildaufnahmeeinrichtung ausgerüsteten Geschwindigkeitsmeßvorrichtung bekannt, wobei entgegenkommende Fahrzeuge gemessen und bildlich registriert werden. Nach Einfahrt eines Fahrzeuges in einen Meßabschnitt wird ein bestimmter Geschwindigkeitsmeßwert bestimmt und die Bildaufnahmevorrichtung ausgelöst unter Einblendung des Wertes in die Aufnahme. Anschließend wird in einem weiteren Meßabschnitt das dort erzeugte Meßsignal weiter ausgewertet und das Ergebnis zur Überprüfung des zuerst gemessenen Geschwindigkeitswertes verwendet. Mit dieser bekannten Anordnung wird eine hohe Meßzuveflässigkeit erreicht. Die Bildaufnahmeeinrichtung kann eine elektronische Videokamera mit einem magnetischen Aufzeichnungsträger sein. Als Geschindigkeitssensor dient eine Doppler-Radar-Meßeinrichtung, welche aus der ausgesandten und vom Fahrzeug reflektierten Strahlung in aus der DE-AS 1 805 903 bekannten Weise durch Überlagerung eines Teils der Sendeenergie mit der vom Fahrzeug reflektierten Empfangsenergie das Dopplersignal erzeugt, dessen Frequenz der Relativgeschwindigkeit zwischen Fahrzeug und Radargerät proportional ist. Die Aufnahmekamera erfordert eine eigene Dateneinblendeeinrichtung, welche über eine Ein/Ausgabestufe eines Mikrorechners angesteuert wird, der in Abhängigkeit von der Überprüfung entweder die Einblendung des Geschwindigkeitsmeßwertes oder die Annullierung der Messung und einen daran anschließenden Weitertransport des Aufzeichnungträgers auslöst.

Aus der DE 39 08 069 A1 ist eine Vorrichtung zur Messung, Registrierung und Anzeige der Fahrzeuggeschwindigkeit bekannt, die aus einer Videokamera mit daran befestigter Entfernungsmeßeinrichtung besteht. Die gemessenen Entfernungsmeßwerte werden einem Mikroprozessor zugeführt, der daraus die Geschwindigkeit des Fahrzeugs berechnet. Dieser Wert wird einem mit dem Mikroprozessor verbundenen Speicher zugeführt, der mit einer in der Videokamera angeordneten Einblendeinrichtung verbunden ist. Diese blendet die gemessenen Geschwindigkeitswerte und ggfl. auch das Datum und die Uhrzeit in das Videobild ein. Auch bei dieser Vorrichtung wird eine besondere Einblendeinrichtung benötigt, um die Geschwindigkeitsdaten im Videobild darzustellen und mit diesem aufzeichnen zu können.

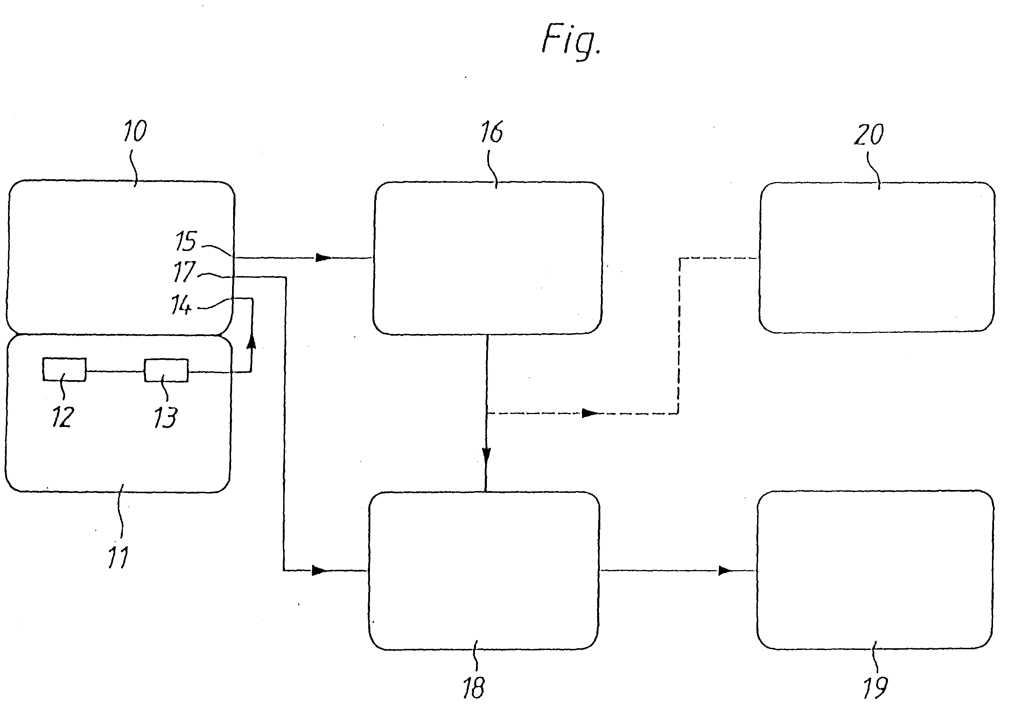

Aus der DE 26 46 636 C2 ist ein Verfahren zur Überwachung der Geschwindigkeit eines Fahrzeuges bekannt, bei dem die Durchlaufzeit des Fahrzeugs durch den Bildbereich einer Femsehkamera gemessen wird. Bei Eintritt des Fahrzeugs in den Bildbereich der Meß-Femsehkamera wird ein Impulsgenerator getriggert. Die Zählimpulse des Generators werden so lange gezählt, wie sich die Abbildung des Fahrzeugs zwischen zwei generierten Markierungslinien im Femsehbild befindet. Diese Markierungslinien entsprechen in der Natur einer Meßentfemung, so daß sich aus der Anzahl der Impulse und der Entfernung die Ist-Geschwindigkeit des Fahrzeugs ermitteln läßt. Mit einer weiteren Beobachtungs-Fernsehkamera wird die Verkehrsszene aufgezeichnet. Ein Viedeobandaufzeichnungsgerät mit zwei Videoeingängen zeichnet die Informationen beider Femsehkameras auf. Das Aufzeichnungsgerät soll zusätzlich einen Toneingang zur gleichzeitigen Aufzeichnung des gesprochenen Kommentars des Überwachungspersonals über den Verkehrsablauf besitzen.

Aus der DE 37 16 319 C1 ist ein Videoaufzeichnungsgerät bekannt, mit dem die vor einem Fahrzeug liegende Verkehrsszene aufgezeichnet werden soll. Das Aufzeichnungsgerät enthält auch einen Tonaufzeichnungseingang, der zeitweilig zur Aufnahme von Zustandsdaten des Fahrzeugs umgeschaltet werden kann. Eine zusätzliche Schalteinrichtung fragt in dieser Zeit nacheinander verschiedene Bordmeßsysteme ab und leitet die Meßsignale auf denToneingang. Damit wird eine zeitsynchrone Speicherung z.B. der Eigengeschwindigkeit des Fahrzeugs und des umgebenden Verkehrsraumes erreicht, die z.B. zur Fehleranalyse bei der Fahrschulausbildung herangezogen werden kann.

Der Erfindung liegt die Aufgabe zugrunde, ein Verfahren zur Verkehrsüberwachung der eingangs genannten Art anzugeben, das eine bewegte Verkehrsszene über einen längeren Zeitraum aufzeichnet, in welchem gleichzeitig die Geschwindigkeit eines Fahrzeuges gemessen und gemeinsam mit der Szene auf einem Aufzeichnungsträger gespeichert wird, sodaß die Zuordnung eines Meßwertes zu einem Fahrzeug eindeutig möglich und jederzeit durch Wiedergabe verfügbar ist. Weiterhin soll eine Vorrichtung zur Durchführung des Verfahrens bereitgestellt werden, die mit handelsüblichen Geräten, nämlich einer elektronischen Kamera, einem Geschwindigkeitssensor und einer Wiedergabeeinrichtung die Aufzeichnung einer Verkehrsszene und die synchrone Messung einer Fahrzeuggeschwindigkeit bei gleichzeitiger Speicherung auf einem herkömmlichen Aufzeichnungsträger mit anschließender Wiedergabe der der Szene zugeordneten Meßwerte und gegebenenfalls anderer Daten in einfacher Weise ermöglicht.

Erfindungsgemäß wird diese Aufgabe durch die kennzeichnenden Merkmale der Ansprüche 1 und 2 gelöst. Vorteilhafte Weiterbildungen sind Gegenstand der Unteransprüche.

Auf diese Weise ist eine wegen der Verwendung herkömmlicher Geräte kostengünstige Verkehrsüberwachung möglich, welche die Szene mit den aktuellen Meßwerten am Meßort speichert, eindeutig einander zuordnet und z.B. auf einem Videoband jederzeit abrufbar zu Verfügung stellt. Als elektronische Kamera können eine Videokamera oder ein Camcorder Verwendung finden, welche die Verkehrsszene wegen der Fahreridentifikation vorzugsweise von vorn aufnehmen. Mit der Videokamera oder dem Camcorder ist ein Geschwindigkeits-Sensor verbunden. Dieser besteht im wesentlichen aus einem optischen Impulssender, einem fotoelektrischen Empfänger und einer Signalverarbeitungsschaltung und ist beispielsweise aus der EP 0 312 524 B1 als Entfernungsmesser bekannt. Durch Laufzeitmessung der ausgesandten und reflektierten Signale wird in bestimmten Zeitabständen die Entfernung gemessen und daraus die Geschwindigkeit des Fahrzeugs ermittelt. Dieser modifizierte Entfernungmesser weist mit Vorteil einen Speicher für ein Schwellwertsignal auf. Die von dem Geschwindigkeits-Sensor empfangenen Signale werden in einem Modulator entsprechend der Aufzeichnungsfrequenz der Tonspur der Videokamera moduliert und dem Audio-Eingang derselben zugeführt, wodurch eine Speicherung auf der Tonspur synchron mit der optischen Speicherung der Verkehrsszene auf dem Videoband erreicht wird. Die derart gespeicherten Signale bzw. Daten werden anschließend in einem Demodulator so aufbereitet, daß sie von dessen RS-232 (V24)-Schnittstelle als serielle Daten einem Videomischer (UNB-232, Videotronic GmbH) zugeführt werden können. Dieser dient der Einblendung der gemessenen Geschwindigkeitswerte und gegebenenfalls anderer Daten wie Uhrzeit, Datum, zulässige Höchstgeschindigkeit etc. Die Verkehrsszene kann sodann jederzeit mittels eines Monitors betrachtet und ausgewertet werden.

Ein Ausführungsbeispiel der Erfindung ist nachstehend unter Bezugnahme auf die schematische Zeichnung erläutert.

Eine elektronische Kamera 10, beispielsweise eine Videokamera oder ein Camcorder, ist mit einem Geschwindigkeitssensor 11 verbunden, der einen Meßdatenspeicher 12 und einen Modulator 13 aufweist; dieser nimmt eine Frequenzumtastung (frequency shift keying) der gemessenen Daten vor. Die modulierten Daten bzw. Signale werden einem Audioeingang 14 der elektronischen Kamera 10 zugeführt und gemeinsam mit den Videosignalen auf einem hier nicht gezeigten Aufzeichnungsträger, z.B. einem Videoband, gespeichert. Die derart modulierten und gespeicherten Daten werden über einen Audioausgang 15 einem Demodulator 16 zusammen mit den Videosignalen vom Videoausgang 17 der Kamera 10 einem Video-Mischer 18 zugeführt, in dem die Meßdateneinblendung erfolgt. Die aufgezeichnete Verkehrsszene kann sodann zusammen mit den eingeblendeten Daten auf einem Monitor 19 betrachtet werden.

Der Geschwindigkeitssensor 11 kann in an sich bekannter Weise mit einem hier nicht gezeigten Speicher für ein Schwellwertsignal versehen sein. Falls die Geschwindigkeit eines mittels des Sensors 11 anvisierten Fahrzeuges unter diesem Schwellwert liegt, findet keine Einblendung des Meßwertes statt. Desgleichen kann die Messung annullliert werden, wenn keine eindeutige Zuordnung des Meßwertes zu einem Fahrzeug möglich ist, weil beispielsweise mehrere Fahzeuge im Meßbereich des Sensors 11 vorhanden sind.

Anstelle der Darstellung der Verkehrsszene mit den eingeblendeten Daten auf dem Monitor 19 ist auch eine getrennte Anzeige der demodulierten Daten auf einem Display 20 möglich (gestrichelt gezeichnet). In diesem Fall ist der Video-mischer 18 nicht erforderlich.

Es versteht sich, daß weitere Varianten des Beschriebenen möglich sind. So kann als Geschwindigkeitssensor eine Doppler-Radar-Meßeinrichtung verwendet werden, wie sie beispielsweise in der DE-AS 1 805 903 beschrieben ist. Wesentlich ist lediglich, daß die für die Geschwindigkeit des Fahrzeugs repräsentativen Signale synchron mit der optischen Aufzeichnung auf der Tonspur des Aufzeichnungsträgers gespeichert werden.

## Patentansprüche

1. Verfahren zur Verkehrsüberwachung durch Messung, Aufzeichnung und Wiedergabe von Fahrzeuggeschwindigkeiten innerhalb einer Verkehrsszene mittels eines Geschwindigkeitssensors, dessen Sensorsignale moduliert werden, einer elektrooptischen Kamera mit einem eine Tonspur aufweisenden Aufzeichnungsträger zur Aufnahme der Verkehrsszene und mit einer Wiedergabeeinrichtung zur Darstellung der Verkehrsszene mit den entsprechenden Fahrzeuggeschwindigkeiten, **dadurch gekennzeichnet**, daß
die Aufzeichnung der Fahrzeuge sowie die Messung ihrer Geschwindigkeit von vom an einem gemeinsamen Ort erfolgt und
die modulierten Sensorsignale auf der Tonspur des Aufzeichnungsträgers synchron mit der optischen Aufzeichnung der zugehörigen Verkehrsszene gespeichert und nach Demodulation synchron mit der optischen Wiedergabe als Meßwerte für die Fahrzeuggeschwindigkeit, gegebenenfalls mit über einen Videomischer zugemischten weiteren Daten, dargestellt werden.

2. Vorrichtung zur Durchführung des Verfahrens nach Anspruch 1, bestehend aus einem Geschwindigkeitssensor, einer elektrooptischen Kamera und einer Wiedergabeeinrichtung, **dadurch gekennzeichnet**, daß
der Geschwindigkeitssensor (11), die elektrooptische Kamera (10) und der Modulator (13) in einem gemeinsamen Gehäuse angeordnet sind, wobei das Meßfeld des Geschwindigkeitssensors einem definierten Aufnahmebereich der elektrooptischen Kamera zugeordnet ist und
der Geschwindigkeitssensor (11) einen Modulator (13) aufweist, dessen Ausgang mit dem Audio-Eingang (14) der elektrooptischen Kamera (10) verbunden ist, sowie dem Audio-Ausgang (15) derselben ein Demodulator (16) nachgeschaltet ist, der die Meßdaten einem Daten-Display (20) oder mittels eines Videomischers (18) gemeinsam mit der optischen Aufzeichnung einem Monitor (19) zuführt.

3. Vorrichtung nach Anspruch 2, **dadurch gekennzeichnet**, daß der Demodulator (16) eine vom Gehäuse für den Geschwindigkeitssensor (11), die elektrooptische Kamera (10) und den Modulator (13) getrennte Baueinheit ist.

4. Vorrichtung nach Anspruch 2, **dadurch gekennzeichnet**, daß der Geschwindigkeitssensor (11) einen Speicher für ein Schwellwertsignal aufweist.

## Claims

1. Method for monitoring traffic by measuring, recording and reproducing traffic speeds within a traffic scene by means of a speed sensor, the sensor signals of which are modulated, an electro-optical camera with a recording carrier, which has a sound track, for recording the traffic scene and with a reproducing equipment for representation of the traffic scene with the corresponding vehicle speeds, characterised thereby that
the recording of the vehicles as well as the measuring of their speed takes place from the beginning at a common location and
the modulated sensor signals on the sound track of the recording carrier are stored synchronously with the optical recording of the associated vehicle scene and after demodulation are represented synchronously with the optical reproduction as measurement values for the vehicle speed, in a given case with further data admixed by way of a video mixer.

2. Device for carrying out the method according to claim 1, consisting of a speed sensor, an electro-optical camera and a reproducing equipment, characterised thereby that
the speed sensor (11), the electro-optical camera (10) and the modulator (13) are arranged in a common housing, wherein the measuring field of the speed sensor is associated with a defined pick-up range of the electro-optical camera and
the speed sensor (11) comprises a modulator (13), the output of which is connected with the audio input (14) of the electro-optical camera (10), and a demodulator (16) is connected downstream to the output (15) of the same, which demodulator feeds the measurement data to a data display (20) or, by means of video mixer (18) in common with the optical recording, to a monitor (19).

3. Device according to claim 2, characterised thereby, that the demodulator (16) is a constructional unit separate from the housing for the speed sensor (11), the electro-optical camera (10) and the modulator (13).

4. Device according to claim 2, characterised thereby that the speed sensor (11) comprises a store for a threshold value signal.

## Revendications

1. Procédé pour la surveillance du trafic par mesure, enregistrement et reproduction des vitesses de véhicules dans une scène de trafic au moyen d'un capteur de vitesse, dont les signaux de capteur sont modulés, d'une caméra électro-optique avec un support d'enregistrement présentant une piste sonore pour la production de la scène de trafic et avec un dispositif de reproduction pour la représentation de la scène de trafic avec les vitesses correspondantes des véhicules, caractérisé en ce que
l'enregistrement des véhicules ainsi que la mesure de leurs vitesses se produisent d'un endroit commun et
les signaux modulés de capteur sur la piste sonore du support d'enregistrement sont mémorisés en synchronisme avec l'enregistrement optique de la scène correspondante de trafic et après démodulation, ils sont représentés en synchronisme avec la reproduction optique en tant que valeurs de mesure pour la vitesse de véhicule, le cas échéant avec d'autres données mélangées dans un mélangeur vidéo.

2. Dispositif pour la mise en oeuvre du procédé selon la revendication 1, se composant d'un capteur de vitesse, d'un caméra électro-optique et d'un dispositif de reproduction, caractérisé en ce que
le capteur de vitesse (11), le caméra électro-optique (10) et le modulateur (13) sont agencés dans un boîtier commun, et au champ de mesure du capteur de vitesse est affectée une zone définie de reproduction de la caméra électro-optique
le capteur de vitesse (11) présente un modulateur (13) dont la sortie est reliée à l'entrée audio (14) de la caméra électro-optique (10) et à la sortie audio (15) de celle-ci est relié un démodulateur (16) qui mène les données de mesure à un affichage de données (20) ou bien, au moyen d'un mélangeur vidéo (18), les conduit en même temps que l'enregistrement optique, à un moniteur (19).

3. Dispositif selon la revendication 2, caractérisé en ce que le démodulateur (16) est un module séparé du boîtier pour le capteur de vitesse (11), la caméra électro-optique (10) et le modulateur (13).

4. Dispositif selon la revendication 2, caractérisé en ce que le capteur de vitesse (11) présente une mémoire pour le signal de valeur de seuil.
